**Europäisches Patentamt**

**European Patent Office**

**Office européen des brevets**

(11) Publication number : **0 326 721 B1**

(12) **EUROPEAN PATENT SPECIFICATION**

(45) Date of publication of patent specification :
**02.01.92 Bulletin 92/01**

(21) Application number : **88203028.1**

(22) Date of filing : **27.12.88**

(51) Int. Cl.⁵ : **A22C 29/00, A22C 25/04**

(54) **Crab sorting screen for prawn fising.**

(30) Priority : **02.02.88 NL 8800249**

(43) Date of publication of application :
**09.08.89 Bulletin 89/32**

(45) Publication of the grant of the patent :
**02.01.92 Bulletin 92/01**

(84) Designated Contracting States :
**BE DE FR GB NL**

(56) References cited :
**DE-A- 3 535 035**
**DE-A- 3 741 418**
**NL-A- 6 712 469**

(56) References cited :
**NL-A- 7 001 768**
**US-A- 1 450 145**
**US-A- 2 483 507**
**US-A- 4 538 327**

(73) Proprietor : **Verburg, Abraham Leendert**
**Havenstraat 11**
**NL-4486 AA Colijnsplaat (NL)**

(72) Inventor : **Verburg, Abraham Leendert**
**Havenstraat 11**
**NL-4486 AA Colijnsplaat (NL)**

(74) Representative : **Baarslag, Aldert D. et al**
**Nederlandsch Octrooibureau**
**Scheveningseweg 82 P.O. Box 29720**
**NL-2502 LS 's-Gravenhage (NL)**

## Description

The invention relates to a crab sorting screen intended for use in prawn or shrimp fishing, comprising a rotary cylindrical drum having at the ends thereof an infeed and discharge opening respectively, and provided with sorting apertures along the entire periphery, which sorting apertures are mainly transverse with respect to the peripheral direction of the drum and are arranged behind each other in a spiral row.

Such a crab sorting screen is known from DE-A-3535035. The drum of this screen consists of a curved, plate-like wall, containing local depressions and raised portions which define sorting apertures.

This known screen has a disadvantage in that it is difficult to sort out the prawns in a reliable way. In practice it appears that a relatively high percentage of the prawns just slides over the wall, together with the rest of a catch, on their way from the infeed to the discharge opening. The relatively shallow depressions in the wall of the drum are not suitable for reliably collecting the prawns out of the catch. Furthermore, the specifically shaped sorting apertures in the periphery appeared to cause regular blockages in the sorting apertures, necessitating additional actions to eliminate these blockages.

The aim of the invention is to provide a prawn sorting screen in which these disadvantages are avoided, and by means of which a reliable operation is ensured. This aim is achieved in that at least one spiral type first round bar is provided with neighbouring windings which are connected by means of elongated generally hollow U-shaped collecting trays, which hollow trays are of increasing depth in the peripheral direction of the drum, have their hollow side facing inwardly with respect to the drum and have a straight bottom running mainly tangentially with respect to the periphery of the drum, whereby the tray is always attached by a shallowest end part to a deepest end part of the tray preceding it to the top edges thereof and in the direction of rotation of the drum, in such a way that between the deepest end of the tray and the shallow end of the following tray attached thereto the sorting aperture is formed.

In the screen according to the invention, the prawns first of all tumble between one of the windings formed by the spiral type round bar. These windings operate on the catch in the same way as in a conventional screen, such as known from NL-A-6712469. In the direction of movement of the catch from the infeed tot the discharge opening of the drum, the windings mutually enclose a relatively wide and unobstructed, deep gap. Therefore, there is hardly any chance that the prawns just slide over the inside of the drum. On the contrary, due to the fact that the centre of gravity of a prawns is at their back, it is more likely that they are tipped into one of these gaps, such that a first selection of the catch is obtained.

Subsequently, the prawns find themselves on the bottom of a tray, which bottom diverges to the outside with respect to the peripheral direction of the drum. As a result, the prawns very smoothly slide along the bottom to the sorting aperture. The diverging shape of the trays ensures that no blocking will occur.

Any other thin objects such as crabs which also tumble into the gaps are rejected by the apertures.

Through rotation of the drum, the position of the collecting trays gradually becomes more vertical, with the result that the prawns by the elongated through-shaped trays are conveyed to the sorting aperture located at the end thereof, while the crabs and other catch constituents remain in the collecting trays, and these remaining constituents then fall out of the trays on further rotation thereof. It has been found that an excellent result is obtained with this device, without the risk of blockage of sorting apertures occurring.

A very efficient embodiment is obtained through the fact that the side walls of the trough-shaped trays taper in the direction of the bottom thereof. The effect of this measure is that the crabs and other catch constituents left behind fall out of the trays very easily when the trays are at the top of the drum during the rotation thereof.

A very efficient embodiment is also obtained by providing the sorting apertures between the collecting trays with an adjustable lip at the top for adjusting the shape and size of the sorting aperture.

With this embodiment the crab sorting screen can be adapted in a fairly simple manner for sorting prawns of different desired sizes. A preferred embodiment is obtained if the adjustable lips are each formed by an extended or flattened part of the shallow end of a collecting tray, said extended part being bent back along the bottom side of the collecting tray in question.

An embodiment which is relatively simple to produce is obtained if the cylindrical drum comprises a round bar formed into a spiral, while the collecting trays are disposed between the spiral windings and are attached by their top edges in each case to spiral parts of the round bar lying opposite each other. Here the round bar formed into a spiral also forms the spiral-type round bar disposed between the collecting trays for guiding the catch in the crosswise direction along the inner periphery of the drum.

The effect of guiding the prawns in the crosswise direction and taking them into the correct position for good sorting is further improved by providing a second round bar formed into a spiral on the inside of the first round bar formed into a spiral.

It is also preferable to provide at the discharge opening of the crab sorting drum along the inside in circular form one or more round bars placed on each other, which have the effect that the discharge of the catch conveyed in the drum is delayed until full sorting has taken place.

The crab sorting screen according to the invention can form part of an existing rinsing prawn sorting machine, the crab sorting screen drum then being fastened to the screen drum at the discharge side of the known rinsing prawn sorting machine and being driven in common therewith.

It is, however, also possible to design the crab sorting screen drum according to the invention as a separate unit, provided with its own drive system.

The invention will now be explained in greater detail with reference to the drawing, in which by way of example a number of embodiments of a crab sorting screen according to the invention are shown.

Fig. 1 shows a side view of a known rinsing prawn sorting drum with a crab sorting screen according to the invention attached thereto, part of the side wall of the device being omitted in order to show the inside of the device.

Fig. 2 shows a side view of the crab sorting screen according to the invention, designed as an independently driven unit.

Fig. 3 shows a perspective view of two connecting collecting trays and the way in which they are disposed on the round bars formed into a spiral from which the crab sorting screen drum is made.

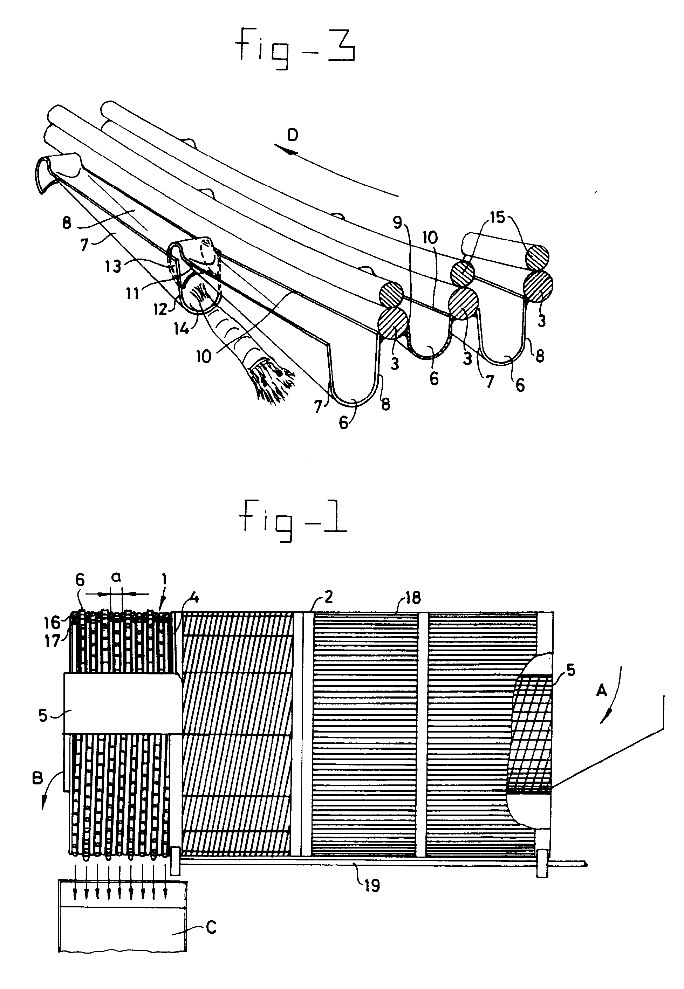

Fig. 1 shows a crab sorting screen drum 1 which is fastened in a manner indicated in further detail below to a rinsing prawn sorting screen which is known per se and is indicated in general by the reference number 2. The crab sorting drum 1 comprises a round bar 3 formed into a spiral (see Fig. 3), which is fixed by means of fixing elements 4 to the inner drum 5 of the prawn sorting drum 2. The round bar 3 formed into a spiral is wound in such a way that the distance (a) between the spiral windings is constant.

Collecting trays 6, which are shown in detail in Fig. 3, are disposed along the entire periphery of the drum between the spiral windings of the round bar 3 formed into a spiral. Each collecting tray 6 is trough-shaped (respectively U-shaped) and has side walls 7 and 8 which are fastened by their top edges 9 and 10 to the peripheral faces facing each other of the adjacent spiral windings of the round bar 3. The side walls 7 and 8 taper towards the bottom of the trough-shaped tray 6. As can be seen clearly in Fig. 3, the trays 6 have a varying depth, the trays being arranged in such a way that a tray 6 is connected by its shallow end 11 to the deep end 12 of the preceding tray 6, viewed in the direction in which the drum is rotated during the working of the device, said direction of rotation being indicated by the arrow P in Fig. 3. As can also be seen from Fig. 3, the shallow end 11 of each tray 6 is extended by a lip 13 which is bent back on itself and is formed in such a way that said lip 13 forms the top side of a sorting aperture 14 formed in the deep end 12 of a tray 6. The lip 13 can be bent in such a way that the shape and size of the sorting aperture 14 can be changed. The lip 13 is fixed by its side edges to the side walls 7 and 8 of the preceding tray 6. The spiral bar 3 also has attached on the inside thereof a further spiral bar 15 which is of smaller diameter than the bar 3.

Provision is also made on the discharge side of the crab sorting drum 1 for a set of round bars 16 and 17 in circular form, the object of which is to delay the discharge sufficiently until the complete sorting has taken place.

Via the fixing elements (f) the drum 1 is driven by the drum 5 of the prawn sorting device 2, drum 5 being connected in a manner known per se to the outer drum 18, which is driven in a manner known per se by the schematically indicated drive unit 19.

The above-described crab sorting drum works as follows.

The prawn catch to be sorted is fed into the inner drum 5 at side A (Fig. 1). Prawns, crabs, undersize fish and additional small catch are then separated from the rest of the catch in the drums 5 and 18 and conveyed to the crab sorting drum 1.

By means of the spiral bar 15 (Fig. 3), the prawns, crabs and undersize fish are guided in the crosswise direction until they go between the spiral bar 3. This guidance of the prawns and other catch produced by the spiral bars 15 and 3 is necessary to permit the commencement of the sorting process.

Due to their elongated shape, and due to the fact that their centre of gravity lies at the back, the prawns are then tipped into the collecting trays 6, in which they come to rest on their backs in the lengthwise direction. Through rotation of the drum 1, the position of the collecting trays 6 gradually becomes increasingly vertical, as a result of which the prawns in the collecting trays 6 are moved through the sorting apertures 14, while the crabs, which are generally slightly rounded in shape, and the other catch are left behind in the collecting trays 6, or even remain lying on the bars 15.

During further rotation of the drum in the direction of the arrow P, and due to the fact that the side walls 7 and 8 taper towards the bottom of the trays 6, the crabs and any other constituents in the trays are conveyed back to the inner periphery of the drum 1 and then discharged at the discharge side B (Fig. 1). The prawns sorted by the drum 1 are collected in the tray C.

It was found that no blockages occurred.

The lips 13 can be bent to change the size and shape of the sorting apertures 14, for example with a gauge. This means that the device can be adapted to different sizes of the prawns to be sorted.

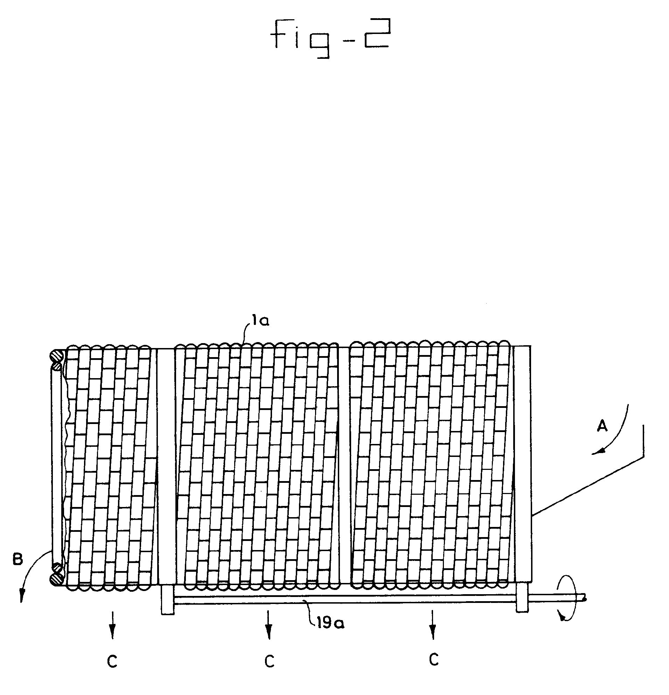

Fig. 2 shows a view of a crab sorting screen drum according to the invention, the dimensions of which are much greater in the lengthwise direction than that shown in Fig. 1, and which is of a size which practically corresponds to the size of an ordinary rinsing prawn screen unit of the type shown in Fig. 1 by reference number 2. This extended crab sorting screen device, indicated by the reference number 1a in Fig. 2, can be driven by the same type of drive unit 19a as that shown in Fig. 1 with the reference number 19. This separate crab sorting screen device 1a can be provided at the infeed end with catch already sorted by a separate rinsing prawn screen unit of the type shown in Figs. 1 and 2, via the infeed opening indicated by A in Fig. 2. The extended crab sorting screen unit according to Fig. 2 is also in principle designed in the same way as the crab sorting screen indicated by reference number 1 in Fig. 1.

## Claims

1. Crab sorting screen intended for use in prawn or shrimp fishing, comprising a rotary cylindrical drum (1) having at the ends thereof an infeed (A) and discharge (B) opening respectively, and provided with sorting apertures (14) along the entire periphery, which sorting apertures (14) are mainly transverse with respect to the peripheral direction of the drum (1) and are arranged behind each other in a spiral row characterized in that at least one spiral type first round bar (3) is provided with neighbouring windings which are connected by means of elongated generally hollow U-shaped collecting trays (6), which hollow trays (6) are of increasing depth in the peripheral direction of the drum (1), have their hollow side facing inwardly with repect to the drum (1) and have a straight bottom running mainly tangentially with respect to the periphery of the drum (1), whereby the tray (6) is always attached by a shallowest end part (11) to a deepest end part (12) of the tray (6) preceding it to the top edges (9, 10) thereof and in the direction of rotation of the drum (1) in such a way that between the deepest end (12) of the tray (6) and the shallow end (11) of the following tray (6) attached thereto the sorting aperture (14) is formed.

2. Crab sorting screen according to Claim 1, characterized in that the side walls (7, 8) of the trays (6) taper towards the bottom thereof.

3. Crab sorting screen according to Claim 1 or 2, characterized in that the sorting apertures between the collecting trays (6) are provided with an adjustable lip (13) at hte top for adjusting the shape and size of the sorting aperture (14).

4. Crab sorting screen according to Claim 3, characterized in that the adjustable lips (13) are each formed by an extended or flattened part of the shallow end (11) of a collecting tray (6), said extended part being bent back along the bottom side of the collecting tray (6) in question.

5. Crab sorting screen according to one of the preceding claims, characterized in that the cylindrical drum (1) comprises a first round bar (3) formed into a spiral, while the collecting trays (6) are disposed between the spiral windings and are attached by their top edges (9, 10) to spiral parts of the round bar (3) always lying opposite each other.

6. Crab sorting screen according to Claim 5, characterized in that a second round bar (15) formed into a spiral is provided on the inside of the first round bar (3) formed into a spiral.

7. Crab sorting screen according to one of the preceding claims, characterized in that one or more round bars (3, 15, 16, 17) placed on each other are provided at the discharge opening (B) of the crab sorting drum (1) along the inside in circular form.

8. Rinsing prawn sorting unit, characterized in that it is provided with a crab sorting screen (1a) according to one of the preceding claims.

9. Rinsing prawn sorting unit according to Claim 8, characterized in that the crab sorting screen drum (1) is fastened to the discharge side of the rinsing prawn sorting machine (2, 5, 18).

10. Rinsing prawn sorting unit according to Claim 8, characterized in that the crab sorting screen drum (1) is designed as a separate unit, provided with its own drive system.

## Patentansprüche

1. Krabbensortiervorrichtung zur Verwendung in der Garnelen- und Shrimpsfischerei, die eine drehbare zylindrische Trommel (1) umfaßt, die an ihren Enden eine Einfüll- (A) beziehungsweise Entleeröffnung (B) hat, und die entlang dem gesamten Umfang mit Sortieröffnungen (14) versehen ist, wobei jene Sortieröffnungen hauptsächlich transversal bezüglich der Umfangsrichtung der Trommel (1) und hintereinander in spiralförmiger Reihenfolge angeordnet sind, dadurch gekennzeichnet, daß zumindest ein erster Rundstab (3) spiralförmig mit benachbarten Windungen versehen ist, die mittels länglicher, im wesentlichen hohler Sammelmulden (6) verbunden sind, wobei jene hohlen Mulden in der Umfangsrichtung der Trommel (1) zunehmende Tiefe haben, ihre Hohlseite dem Inneren der Trommel (1) zugewandt ist, und die einen geraden Boden haben, der hauptsächlich tangential zum Umfang der Trommel (1) verläuft, wobei die Sammelmulde (6) immer durch einen flachsten Endteil (11) an einem tiefsten Endteil (12) der vorausgehenden Sammelmulde (6) an deren oberen Kanten davon und in der Drehrichtung der Trommel (1) derart befestigt ist, daß zwischen dem tiefsten Ende (12) der Sammelmulde (6) und dem flachsten Ende (11) der darauffolgend daran angebrachten Sammelmulde (6) die Sortieröffnung gebildet wird.

2. Krabbensortiervorrichtung nach Anspruch 1, dadurch gekennzeichnet, daß die Seitenwände (7, 8) der Sammelmulden (6) zu deren Böden hin konisch zulaufen.

3. Krabbensortiervorrichtung nach Anspruch 1 oder 2, dadurch gekennzeichnet, daß die Sortieröffnungen (14) zwischen den Sammelmulden (6) an der Spitze mit einer verstellbaren Lippe (13) zum Einstellen der Form und Größe der Sortieröffnung versehen sind.

4. Krabbensortiervorrichtung nach Anspruch 3, dadurch gekennzeichnet, daß die Einstell-Lippen (13) jeweils durch einen verlängerten oder abgeflachten Teil des flachen Endes (11) der Sammelmulde (6) gebildet werden, wobei der verlängerte Teil entlang der Bodenseite der in Frage kommenden Sammelmulde (6) zurückgebogen wird.

5. Krabbensortiervorrichtung nach einem der vorgehenden Ansprüche, dadurch gekennzeichnet, daß die zylindrische Trommel (1) einen ersten, zu einer Spirale geformten, Rundstab (3) beinhaltet, während die Sammelmulde (6) zwischen den Spiralwindungen angeordnet ist und mit ihren oberen Kanten (9, 10) an Spiralteile der Rundstäbe (3), immer einander entgegengesetzt, angebracht ist.

6. Krabbensortiervorrichtung nach Anspruch 5, dadurch gekennzeichnet, daß ein zweiter, zu einer Spirale geformter Rundstab (15) an der Innenseite des ersten zu einer Spirale geformten Rundstabs vorgesehen ist.

7. Krabbensortiervorrichtung nach einem der vorhergehenden Ansprüche, dadurch gekennzeichnet, daß ein oder mehrere aufeinander angebrachte Rundstäbe (3, 15, 16, 17) kreisförmig an der Innenseite der Entleeröffnung (B) der Krabbensortiertrommel (1) vorgesehen sind.

8. Garnelenspülsortieranlage, dadurch gekennzeichnet, daß sie mit einer Krabbensortiervorrichtung versehen ist, nach einem der vorhergehenden Ansprüche.

9. Garnelenspülsortieranlage, dadurch gekennzeichnet, daß die Krabbensortiervorrichtungs-Trommel (1) an der Entleerseite der Garnelenspülsortiermaschine (2, 5, 18) befestigt ist.

10. Garnelenspülsortieranlage nach Anspruch 8, dadurch gekennzeichnet, daß die Krabbensortiervorrichtungs-Trommel (1) als eine separate Einheit mit ihrem eigenen Antriebssystem konstruiert ist.

**Revendications**

1. Crible pour le triage des crabes destiné à être utilisé pour la pêche au bouquet ou à la crevette, comportant un fût rotatif cylindrique (1) possédant aux extrémités de ce dernier une ouverture d'introduction (A) et une ouverture d'évacuation (B) respectivement, et pourvu d'orifices de triage (14) situés le long de l'entière périphérie, orifices de triage (14) qui sont essentiellement transversaux vis-à-vis de la direction périphérique du fût (1) et qui sont disposés l'un derrière l'autre selon un alignement en spirale caractérisé en ce que au moins une première barre ronde (3) du type en spirale est disposée avec des spires avoisinantes qui sont reliées au moyen de casiers collecteurs allongés (6) globalement creux et en forme de U, casiers creux (6) qui ont une profondeur croissante dans le sens périphérique du fût (1), présentent leur côté creux face à l'intérieur vis-à-vis du fût (1) et possèdent un fond rectiligne s'étendant dans une direction essentiellement tangentielle vis-à-vis de la périphérie du fût (1), de manière que le casier (6) soit toujours fixé par la partie d'extrémité la moins profonde (11) à la partie d'extrémité la plus profonde (12) du casier (6) qui le précède au droit des bords du haut (9, 10) de ce dernier et dans le sens de rotation du fût (1) d'une telle façon que, entre l'extrémité la plus profonde (12) du casier (6) et l'extrémité peu profonde (11) du casier (6) suivant qui lui est fixé, l'orifice de triage (14) soit ménagé.

2. Crible pour le triage des crabes conforme à la Revendication 1, caractérisé en ce que les parois latérales (7, 8) des casiers (6) convergent vers le fond de ces derniers.

3. Crible pour le triage des crabes conforme à la revendication 1 ou à la revendication 2, caractérisé en ce que les orifices de triage situés entre les casiers collecteurs (6) sont pourvus d'un rebord réglable (13) situé au sommet et destiné à régler la forme et la taille de l'orifice de triage (14).

4. Crible pour le triage des crabes conforme à la revendication 3, caractérisé en ce que les rebords réglables (13) sont constitués chacun par une partie étirée ou aplatie de l'extrémité peu profonde (11) d'un casier collecteur (6), ladite partie étirée étant recourbée en arrière le long du côté inférieur du casier collecteur (6) en question.

5. Crible pour le triage des crabes conforme à l'une des revendications précédentes, caractérisé en ce que le fût cylindrique (1) comporte une première barre ronde (3) façonnée en une spirale, tandis que les casiers collecteurs (6) sont disposés entre les spires de la spirale et sont fixés par leurs bords du haut (9, 10) à des parties formant spires de la barre ronde (3) se trouvant toujours en face l'une de l'autre.

6. Crible pour le triage des crabes conforme à la revendication 5, caractérisé en ce que une seconde barre ronde (15) façonnée en une spirale est disposée à l'intérieur de la première barre ronde (3) façonnée en une spirale.

7. Crible pour le triage des crabes conforme à l'une des revendications précédentes, caractérisé en ce que une ou plusieurs barres rondes (3, 15, 16, 17) placées l'une sur l'autre sont disposées au droit de l'ouverture d'évacuation (B) du fût (1) pour le triage des crabes le long de l'intérieur et en configuration circulaire.

8. Ensemble (1) de rinçage et de triage de crevettes, caractérisé en ce qu'il est muni d'un crible (1) pour le triage des crabes conforme à l'une des revendications précédentes.

9. Ensemble de rinçage et de triage de crevettes conforme à la Revendication 8, caractérisé en ce que le fût formant crible (1) pour le triage des crabes est assujetti au côté pour l'évacuation de la machine de rinçage et de triage de crevettes (2, 5, 18).

10. Ensemble de rinçage et de triage de crevettes conforme à la Revendication 8, caractérisé en ce que le fût formant crible (1) pour le triage des crabes est conçu comme un dispositif distinct, muni de son propre système d'entraînement.

# Fig-3

# Fig-1

# Fig-2